# EUROPEAN PATENT APPLICATION

(11) **EP 4 792 660 A1**
(43) Date of publication of application: **19.08.2026**
(21) Application number: 24894148.6
(22) Date of filing: 19.11.2024
(51) Int. Cl.: A23L 27/00, A23J 3/00, A23L 13/00, A23L 35/00

(54) **BEAN-ODOR-MASKING AGENT, METHOD FOR MASKING BEAN ODOR, FOOD COMPOSITION, METHOD FOR PRODUCING SAID FOOD COMPOSITION, AND BEAN-DERIVED-FOOD-CONTAINING COMPOSITION**

(30) Priority: 24.11.2023 JP 2023199328
(71) Applicant: Kikkoman Corporation, Noda-shi, Chiba 278-8601 (JP)
(72) Inventor: KAN, Eiichiro, Noda-shi, Chiba 278-8601 (JP); YUZUKI, Masanobu, Noda-shi, Chiba 278-8601 (JP)
(74) Representative: Kramer Barske Schmidtchen Patentanwälte PartG mbB
(86) International application number: PCT/JP2024/040982
(87) International publication number: WO 2025/110157

(57) **Abstract**

The present invention relates to a bean odor masking agent containing at least one of heptanoic acid, 2,4-decadienal, and 3-octen-2-one, and a bean-derived food-containing composition containing at least one of heptanoic acid, 2,4-decadienal, and 3-octen-2-one.

## Description

### TECHNICAL FIELD

The present invention relates to a bean odor masking agent, a method for masking a bean odor, a food composition, a method for producing the food composition, and a bean-derived food-containing composition.

### BACKGROUND ART

Meat is abundant in nutrients such as vitamins, proteins, and minerals and is a nutritionally important food material. However, excessive intake of meat can cause various chronic diseases including metabolic syndrome because meat contains a large amount of lipids, in particular saturated fatty acids, and because its caloric content is higher also compared with other food materials.

Therefore, in order to prevent excessive intake of meat, use of a meat-like food, which appears just like a processed meat product, has been attracting attention. While a meat-like food contains less saturated fatty acids and has lower energy than meat, the meat-like food is made from food materials that contain a similar amount of protein. Intake of a meat-like food as an alternative to a meat product can lead to prevention, improvement, or the like of a lifestyle-related disease such as metabolic syndrome.

As a representative of meat-like food, a food using grains and beans such as soybeans is processed for various applications and used for a food composition and a food (Patent Literatures 1 and 2).

### CITATION LIST

### PATENT LITERATURE

Patent Literature 1: JP6396517B
Patent Literature 2: JP7216500B

### SUMMARY OF INVENTION

### TECHNICAL PROBLEM

However, food derived from beans such as soybeans has a raw material odor, that is, a bean odor. Therefore, this bean-derived food has room for improvement in terms of bean odors.

Therefore, an object of the present invention is to provide an agent for masking a bean odor of a bean-derived food or the like, a method for masking a bean odor, a food composition in which a bean odor is masked, a method for producing the food composition, and a bean-derived food-containing composition in which a bean odor is masked.

### SOLUTION TO PROBLEM

As a result of intensive studies to solve the above problems, the present inventors have found that an agent containing at least one of heptanoic acid, 2,4-decadienal, and 3-octen-2-one masks a bean odor of a bean-derived food or the like.

The present invention is as follows.
[1] A bean odor masking agent containing at least one of heptanoic acid, 2,4-decadienal, and 3-octen-2-one.
[2] The bean odor masking agent according to [1] above, in which the bean odor is a bean odor during chewing.
[3] The bean odor masking agent according to [1] or [2] above, further containing a flavor.
[4] A method for masking a bean odor, the method including blending the bean odor masking agent according to [1] or [2] above into a bean-derived food.
[5] A food composition containing the bean odor masking agent according to [1] or [2] above and a bean-derived food.
[6] A method for producing a food composition, the method including blending the bean odor masking agent according to [1] or [2] above into a bean-derived food.
[7] A bean-derived food-containing composition containing at least one of heptanoic acid, 2,4-decadienal, and 3-octen-2-one.
[8] The bean-derived food-containing composition according to [7] above, in which a content of heptanoic acid is 1.0×10⁻⁷ to 5.0×10⁻⁴ parts by mass with respect to 100 parts by mass of the bean-derived food.
[9] The bean-derived food-containing composition according to [7] above, in which a content of 2,4-decadienal is 1.0×10⁻⁸ to 5.0×10⁻⁴ parts by mass with respect to 100 parts by mass of the bean-derived food.
[10] The bean-derived food-containing composition according to [7] above, in which a content of 3-octen-2-one is 1.0×10⁻⁷ to 5.0×10⁻⁴ parts by mass with respect to 100 parts by mass of the bean-derived food.

### ADVANTAGEOUS EFFECTS OF INVENTION

The present invention provides a bean odor masking agent and a method for masking a bean odor. In addition, the present invention provides a food composition in which a bean odor is masked, and a method for producing the food composition. Further, the present invention provides a bean-derived food-containing composition in which a bean odor is masked.

### DESCRIPTION OF EMBODIMENTS

Hereinafter, the present invention will be described in detail, but these are examples of preferred embodiments. The present invention is not limited to these contents.

The expression "to" of a numerical range is a range including the numerical values before and after it. For example, "0 mass% to 100 mass%" means a range of 0 mass% or more and 100 mass% or less.

In the present description, the term "bean odor" refers to a bean-specific odor felt in a nasal cavity (retronasal odor) from a back portion of a throat through an oral cavity when a bean-derived food is contained in the mouth, when the bean-derived food is chewed, and/or when the bean-derived food is swallowed. Here, the bean odor may be an odor sensed as a combination of the retronasal odor and an odor directly sensed at the nose (orthonasal odor).

The bean odor is preferably a bean odor when a bean-derived food is chewed. The chewing refers to crushing food contained in the mouth by teeth to form a soft and easy-to-swallow food bolus.

The bean odor may be a soybean odor. That is, the "bean-specific odor" in the definition of the "bean odor" may be the "soybean-specific odor".

In the present description, "masking of a bean odor" includes both disappearance of the bean odor and reduction of the bean odor.

### [Bean Odor Masking Agent]

A bean odor masking agent according to one aspect of the present invention contains at least one of heptanoic acid, 2,4-decadienal, and 3-octen-2-one. In the present description, the bean odor masking agent according to one aspect of the present invention is also referred to as an "agent according to one aspect of the present invention".

When the agent according to one aspect of the present invention is blended into a bean-derived food or the like, it is presumed that at least one of heptanoic acid, 2,4-decadienal, and 3-octen-2-one reaches olfactory epithelial cells at the same time as an off-flavor, and maintains the off-flavor and a volatilization state, so that the bean odor of the bean-derived food or the like can be masked.

In the present description, the off-flavor is a bean odor.

In the present description, it can be said that the bean odor is masked when a bean odor of a composition obtained by blending the agent according to one aspect of the present invention into a bean-derived food disappears or is reduced as compared with a bean odor of a bean-derived food into which the agent according to one aspect of the present invention is not blended.

Heptanoic acid, 2,4-decadienal, and 3-octen-2-one may be natural products or synthetic products, and may be purified from natural products or commercially available, which are not particularly limited. In addition, heptanoic acid, 2,4-decadienal, and 3-octen-2-one themselves may be used, and may be, for example, in the form of a solvate such as a hydrate thereof.

The content of each of heptanoic acid, 2,4-decadienal, and 3-octen-2-one contained in the agent according to one aspect of the present invention is not particularly limited, and can be appropriately set with an upper limit of the total content thereof being 100 mass%.

In the present description, when heptanoic acid, 2,4-decadienal, and 3-octen-2-one are in the form of a solvate such as a hydrate thereof, the content of each of heptanoic acid, 2,4-decadienal, and 3-octen-2-one is a value converted to the amount of the same moles of the compound itself.

The agent according to one aspect of the present invention may further contain a flavor in order to impart a better flavor to the bean-derived food. Examples of the flavor include isothiocyanates, indole, and derivatives thereof, ethers, esters, ketones, fatty acids, higher aliphatic alcohols, higher aliphatic aldehydes, higher aliphatic hydrocarbons, thioethers, thiols, terpene-based hydrocarbons, phenol ethers, phenols, furfural and derivatives thereof, aromatic alcohols, aromatic aldehydes, and lactones. The content of the flavor in the agent according to one aspect of the present invention is preferably 1.0×10⁻¹⁰ to 1 mass%, and more preferably 1.0×10⁻⁸ to 1.0×10⁻³ mass%.

The agent according to one aspect of the present invention may further contain other components. Examples of the other components include a carrier (base) and an additive (for example, an excipient, a dispersant, an emulsifier, a buffer, a stabilizer, a binder, a disintegrant, a lubricant, an antioxidant, a preservative, a coating agent, or a colorant) that can be blended into foods and drinks or pharmaceuticals. Examples of the excipient include: oligosaccharides such as isomaltooligosaccharides, galactooligosaccharides, and fructooligosaccharides; saccharides such as dietary fibers and polysaccharides such as dextrin, cellulose, gum arabic, and starch (corn starch and the like), lactose, glucose, fructose, sugar, sucrose, maltose, starch syrup, honey, invert sugar, syrup, and isomerized sugars (for example, high-fructose syrup, fructose syrup, and high-fructose corn syrup); and sugar alcohols such as sorbitol, erythritol, lactitol, maltitol, mannitol, xylitol, and reduced palatinose.

The form of the masking agent of the present invention is not particularly limited. For example, the masking agent may be in a liquid form (for example, a solution form or a suspension form), a paste form, or a solid form (for example, a powder form or a granular form). The masking agent is preferably in a liquid form or a solid form.

### [Method for Masking Bean Odor]

When a bean odor masking agent according to one aspect of the present invention is blended into a bean-derived food, the bean odor of the bean-derived food or the like can be masked. Therefore, according to one aspect of the present invention, there is provided a method for masking a bean odor, which includes blending the agent according to one aspect of the present invention into a bean-derived food.

### (Bean-Derived Food)

In the present description, the "bean-derived food" is not particularly limited as long as it is a food derived from beans. The bean-derived food may be any food as long as masking of the bean odor is desired, and may already have a bean odor or may have a bean odor in the future.

Examples of the raw material beans include soybeans, whole soybeans, peas, broad beans, and adzuki beans. The raw material beans are preferably soybeans, that is, the bean-derived food is preferably a soybean-derived food.

The shape of the bean-derived food may be any of a solid, a semi-solid, a fluid, a jelly, a liquid, and the like. A solid is preferable, and a solid that can be chewed is more preferable.

Examples of the bean-derived food include beans, boiled beans, roasted beans, soybean flour, natto, miso, soy sauce, soy milk, yuba, soy pulp, tofu, frozen tofu, deep-fried tofu, deep-fried thick tofu, a substitute for meat, noodles, foods used in the production thereof, and foods in the middle of the production thereof. Among them, the substitutes for meat are preferable. The substitute for meat is a food that does not contain meat and can be a substitute for livestock meat.

Examples of the substitute for meat include foods in forms such as minced meat, a patty, a hamburger steak, surimi, and ham. Examples of the substitute for meat include foods obtained by heating and cooking these substitutes for meat, for example, cooked materials such as fried chicken, nuggets, boiled chicken, hamburger steaks, meatballs, meatloaf, minced meat cutlets, gyoza dumplings, shumai dumplings, wontons, spring rolls, and meat buns that have a meat-like flavor.

### [Features of Method for Masking Bean Odor]

A blending ratio of the agent according to one aspect of the present invention to the bean-derived food can be appropriately set according to the total content of heptanoic acid, 2,4-decadienal, and 3-octen-2-one in the agent according to one aspect of the present invention.

It is preferable that the agent according to one aspect of the present invention is blended into the bean-derived food such that a total blending amount of heptanoic acid, 2,4-decadienal, and 3-octen-2-one is preferably 1.0×10⁻⁹ to 1.0×10⁻³ parts by mass, and more preferably 1.0×10⁻⁸ to 5.0×10⁻⁴ parts by mass with respect to 100 parts by mass of the bean-derived food.

It is preferable that the agent according to one aspect of the present invention is blended into the bean-derived food such that a blending amount of heptanoic acid is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

It is preferable that the agent according to one aspect of the present invention is blended into the bean-derived food such that a blending amount of 2,4-decadienal is preferably 1.0×10⁻⁹ to 1.0×10⁻³ parts by mass, and more preferably 1.0×10⁻⁸ to 5.0×10⁻⁴ parts by mass with respect to 100 parts by mass of the bean-derived food.

It is preferable that the agent according to one aspect of the present invention is blended into the bean-derived food such that a blending amount of 3-octen-2-one is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

The timing and method for blending the agent according to one aspect of the present invention into the bean-derived food are not particularly limited and can be appropriately selected. The agent according to one aspect of the present invention may be blended into the finished bean-derived food, may be blended into the bean-derived food in the middle of the production, or may be blended into the bean-derived food used for the production.

When the agent according to one aspect of the present invention is blended into the bean-derived food and then heating is performed, the heating temperature is preferably 80°C to 100°C, and the heating time is preferably 2 minutes to 10 minutes.

### [Food Composition]

A food composition according to one aspect of the present invention contains the bean odor masking agent according to one aspect of the present invention and a bean-derived food.

A bean odor of the food composition according to one aspect of the present invention is masked as compared with a bean-derived food not containing the agent according to one aspect of the present invention.

The bean-derived food is preferably the same as the preferable bean-derived food in the [Method for Masking Bean Odor].

The content of the agent according to one aspect of the present invention in the food composition according to one aspect of the present invention can be appropriately set according to the total content of heptanoic acid, 2,4-decadienal, and 3-octen-2-one in the agent according to one aspect of the present invention.

The content of the bean-derived food in the food composition according to one aspect of the present invention is not particularly limited, and is preferably 1 mass% or more and 100 mass% or less, and more preferably 40 mass% or more and less than 100 mass%.

The food composition according to one aspect of the present invention preferably contains an agent according to one aspect of the present invention such that the total amount of heptanoic acid, 2,4-decadienal, and 3-octen-2-one is preferably 3.0×10⁻⁹ to 3.0×10⁻³ parts by mass, and more preferably 3.0×10⁻⁸ to 1.5×10⁻³ parts by mass with respect to 100 parts by mass of the bean-derived food.

The food composition according to one aspect of the present invention preferably contains an agent according to one aspect of the present invention such that the amount of heptanoic acid is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

The food composition according to one aspect of the present invention preferably contains an agent according to one aspect of the present invention such that the amount of 2,4-decadienal is preferably 1.0×10⁻⁹ to 1.0×10⁻³ parts by mass, and more preferably 1.0×10⁻⁸ to 5.0×10⁻⁴ parts by mass with respect to 100 parts by mass of the bean-derived food.

The food composition according to one aspect of the present invention preferably contains an agent according to one aspect of the present invention such that the amount of 3-octen-2-one is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

The food composition according to one aspect of the present invention may further contain other components. Examples of the other components include a carrier (base) and an additive (for example, an excipient, a dispersant, an emulsifier, a buffer, a stabilizer, a binder, a disintegrant, a lubricant, an antioxidant, a preservative, a coating agent, or a colorant) that can be blended into foods and drinks or pharmaceuticals. Examples of the excipient include: oligosaccharides such as isomaltooligosaccharides, galactooligosaccharides, and fructooligosaccharides; saccharides such as polysaccharides such as dextrin, cellulose, gum arabic, and starch (corn starch and the like), lactose, glucose, fructose, sugar, sucrose, maltose, starch syrup, honey, invert sugar, syrup, and isomerized sugars (for example, high-fructose syrup, fructose syrup, and high-fructose corn syrup); sugar alcohols such as sorbitol, erythritol, lactitol, maltitol, mannitol, xylitol, and reduced palatinose; substitutes for meat other than those derived from beans; vegetable proteins such as soybean protein isolate, wheat gluten, defatted soybeans, and peas; dietary fibers; and lipids. The food composition according to one aspect of the present invention is preferably used as a substitute for bean-derived meat, and therefore, the food composition according to one aspect of the present invention preferably contains polysaccharides, dietary fibers, proteins, and the like.

The shape of the food composition according to one aspect of the present invention may be any of a solid, a semi-solid, a fluid, a jelly, and a liquid. A solid is preferable, and a solid that can be chewed is more preferable.

More specifically, the food composition according to one aspect of the present invention can be used as a substitute for livestock meat. The food composition according to one aspect of the present invention is preferably a livestock meat-like food composition. The livestock meat means meat from livestock (pigs, cows, sheep, goats, horses, and the like), poultry (chickens, quails, domestic ducks, ducks, crossbreed ducks, geese, turkeys, and the like), and wildlife such as deer and boar. The definition of livestock meat includes, in addition to so-called meat (muscle), tissues generally used for processed livestock meat foods, such as skin, fat, tendons, cartilage, internal organs, and blood.

The food composition according to one aspect of the present invention can be processed into minced meat, a patty, a hamburger steak, surimi, ham, and the like using a food processor or a mincer.

The food composition according to one aspect of the present invention may be subjected to a cutting process such as chopping or cutting into large pieces in advance. Moreover, by adding and kneading the food composition according to one aspect of the present invention into a mixture of a plant food material and another food material such as vegetable which has been subjected to a cutting process and then subjecting the kneaded mixture to cooking, a cooked material having a meat-like flavor in the form of fried chicken, nugget, *Shigureni* (food boiled down in soy sauce and ginger), hamburger steaks, meatballs, meatloaf, *Menchi-katsu* (fried cutlet of minced meat), gyoza, shumai, wontons, spring rolls, steamed pork buns or the like is obtained. In this regard, meat may be added as another food material. The cooked material is not limited to those listed above, and examples thereof include a cooked material generally using soy sauce as a seasoning component and the like.

### [Method for Producing Food Composition]

A method for producing a food composition according to one aspect of the present invention includes blending the bean odor masking agent according to one aspect of the present invention into a bean-derived food.

The agent according to one aspect of the present invention can be blended at any stage in the production process of the food composition according to one aspect of the present invention, and the timing and method of blending the agent are not particularly limited. The production of the food composition according to one aspect of the present invention can be carried out in the same manner as the production of ordinary foods, except that the agent according to one aspect of the present invention is blended into the bean-derived food. The agent according to one aspect of the present invention may be blended into the finished bean-derived food, may be blended into the bean-derived food in the middle of the production, or may be blended into the bean-derived food used for the production.

### [Bean-Derived Food-containing Composition]

A bean-derived food-containing composition according to one aspect of the present invention contains at least one of heptanoic acid, 2,4-decadienal, and 3-octen-2-one. In the present description, the bean-derived food-containing composition according to one aspect of the present invention is also referred to as a "bean-derived food-containing composition".

The bean odor of the bean-derived food-containing composition according to one aspect of the present invention disappears or is reduced, that is, the bean odor is masked, as compared with a bean-derived food-containing composition not containing heptanoic acid, 2,4-decadienal, and 3-octen-2-one.

Heptanoic acid, 2,4-decadienal, and 3-octen-2-one may be natural products or synthetic products, and may be purified from natural products or commercially available, which are not particularly limited. In addition, heptanoic acid, 2,4-decadienal, and 3-octen-2-one may be originally contained in the bean-derived food or may be added to the bean-derived food-containing composition from the outside. In addition, heptanoic acid, 2,4-decadienal, and 3-octen-2-one themselves may be used, and may be, for example, in the form of a solvate such as a hydrate thereof.

In the bean-derived food-containing composition according to one aspect of the present invention, the total amount of heptanoic acid, 2,4-decadienal, and 3-octen-2-one is preferably 3.0×10⁻⁹ to 3.0×10⁻³ parts by mass, and more preferably 3.0×10⁻⁸ to 1.5×10⁻³ parts by mass with respect to 100 parts by mass of the bean-derived food.

In the bean-derived food-containing composition according to one aspect of the present invention, the amount of heptanoic acid is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

In the bean-derived food-containing composition according to one aspect of the present invention, the amount of 2,4-decadienal is preferably 1.0×10⁻⁹ to 1.0×10⁻³ parts by mass, and more preferably 1.0×10⁻⁸ to 5.0×10⁻⁴ parts by mass with respect to 100 parts by mass of the bean-derived food.

In the bean-derived food-containing composition according to one aspect of the present invention, the amount of 3-octen-2-one is preferably 1.0×10⁻⁸ to 1.0×10⁻³ parts by mass, and more preferably 1.0×10⁻⁷ to 5.0×10⁻⁴ parts by mass with respect to 100 parts by mass of the bean-derived food.

The bean-derived food-containing composition and the bean-derived food are preferably the same as the preferable bean-derived food in the [Method For Masking Bean Odor]. The bean-derived food-containing composition may be a composition containing no fermented products of beans.

The bean-derived food-containing composition according to one aspect of the present invention may further contain other components. The other components are the same as the other components that may be contained in the food composition according to one aspect of the present invention.

The contents of heptanoic acid, 2,4-decadienal, and 3-octen-2-one contained in the bean odor masking agent, the food composition, and the bean-derived food-containing composition according to one aspect of the present invention can be analyzed according to a GC-MS method. Measurement conditions of GC-MS are shown below.
GC-MS: GC-MS-QP2010Ultra (manufactured by Shimadzu Corporation)
Column: GC capillary column DB-WAX Ultra Inart (manufactured by Agilent)
Column oven: 40°C (3 min)→5°C/min→110°C→10°C/min→240°C (5 min)
Injection port temperature: 240°C
Carrier gas: He
Interface temperature: 240°C
Ion source temperature: 240°C
Data collection time: 2 min to 35 min
Mass range: 40 m/z to 250 m/z

The preferred shape of the bean-derived food-containing composition according to one aspect of the present invention is the same as the preferred shape of the food composition according to one aspect of the present invention. Similarly to the food composition according to one aspect of the present invention, the bean-derived food-containing composition according to one aspect of the present invention can be used as a substitute for livestock meat, and is preferably a livestock meat-like food composition.

As described above, the following matters are disclosed in the present description.
<1> A bean odor masking agent containing at least one of heptanoic acid, 2,4-decadienal, and 3-octen-2-one.
<2> The bean odor masking agent according to <1> above, in which the bean odor is a bean odor during chewing.
<3> The bean odor masking agent according to <1> or <2> above, further containing a flavor.
<4> A method for masking a bean odor, the method including blending the bean odor masking agent according to any one of <1> to <3> above into a bean-derived food.
<5> A food composition containing the bean odor masking agent according to any one of <1> to <3> above and a bean-derived food.
<6> A method for producing a food composition, the method including blending the bean odor masking agent according to any one of <1> to <3> above into a bean-derived food.
<7> A bean-derived food-containing composition containing at least one of heptanoic acid, 2,4-decadienal, and 3-octen-2-one.
<8> The bean-derived food-containing composition according to <7> above, in which a content of heptanoic acid is 1.0×10⁻⁷ to 5.0×10⁻⁴ parts by mass with respect to 100 parts by mass of the bean-derived food.
<9> The bean-derived food-containing composition according to <7> above, in which a content of 2,4-decadienal is 1.0×10⁻⁸ to 5.0×10⁻⁴ parts by mass with respect to 100 parts by mass of the bean-derived food.
<10> The bean-derived food-containing composition according to <7> above, in which a content of 3-octen-2-one is 1.0×10⁻⁷ to 5.0×10⁻⁴ parts by mass with respect to 100 parts by mass of the bean-derived food.

### Examples

The present invention is described specifically below with reference to Examples, but the present invention is not limited to the Examples below unless it does not go beyond the gist thereof.

First, prior to the Examples, the materials shown below were prepared.

### [Added Reagents]

Heptanoic acid, 2,4-decadienal, and 3-octen-2-one were used as a soybean odor mask aroma component. Hereinafter, heptanoic acid, 2,4-decadienal, and 3-octen-2-one are also referred to as reagents. As each reagent, a food-grade reagent manufactured by Sigma-Aldrich was used.

### [Textured Soy Protein]

As a textured soy protein, FUJINIK 52S manufactured by Fuji Oil Co., Ltd. or TEXTURED VEGETABLE PROTEIN CRUMBLES manufactured by Now Foods was used.

### [Others]

The soybean protein powder manufactured by Willar was used, and the wheat flour manufactured by Nisshin Flour Milling Inc. was used.

### <Example 1: Test for Adding Bean Odor Mask Component to Textured Soy Protein>

A textured soy protein was prepared according to the following procedure.

The textured soy protein (20 g) was reconstituted with 60 mL of water and allowed to stand at room temperature for 30 minutes. Thereafter, when the textured soy protein was to be rehydrated, the textured soy protein was similarly rehydrated at a ratio of 1:3 on a mass basis. Thereafter, the resultant was heated at 100°C for 5 minutes using a frying pan and used as a sample for sensory evaluation.

When the reagent was added, a diluent was prepared, and the reagent was added so as to be 0.0001 to 5 ppm per 1 g of the sample after cooking. In the present description, ppm is a value on a mass basis, and when the reagent is 1 ppm per 1 g of sample, the reagent is 1×10⁻⁶ g per 1 g of sample.

Sensory evaluation was performed by 4 to 5 panelists who were trained to determine soybean odor according to JIS standards by a 7-step scoring method. The sensory evaluator chews the sample 10 times or more, and evaluated the bean odor wafting from the nose. A sample to which no reagent was added was evaluated as "5" (a little strong sense of a bean odor), and the samples were evaluated by "0" (no sense of a bean odor) to "7" (a strong sense of a bean odor). The T-test was performed based on the results of the sensory evaluation to determine whether there was a significant difference with respect to the score "5" of the control.

The results are shown in Table 1. It was found that heptanoic acid and 3-octen-2-one had a significant effect of reducing a bean odor in a concentration range of 0.001 to 5 ppm (Table 1). In addition, under the conditions of mixing 2,4-decadienal and the three components, a significant effect of reducing the bean odor was found in the concentration range of 0.0001 ppm to 5 ppm (Table 1). It was found that the flavor of the added reagent was too strong at 10 ppm. In Table 1, "mixing of three components" is a result when a reagent obtained by mixing three components including heptanoic acid, 2,4-decadienal, and 3-octen-2-one is added to the textured soy protein such that the total concentration of these components is the final concentration described in Table 1.

**[Table 1]**

| Table 1 Test for addition to textured soy protein | | | | | |
|---|---|---|---|---|---|
| | Final concentration (ppm) | | | | |
| | 5 | 0.1 | 0.01 | 0.001 | 0.0001 |
| Heptanoic acid | 3.0 | 3.6 | 3.6 | 3.4 | - |
| 2,4-decadienal | 2.2 | 3.4 | 3.2 | 3.4 | 3.7 |
| 3-octen-2-one | 1.8 | 3.6 | 3.3 | 2.9 | - |
| Mixing of three components | 2.0 | 2.5 | 3.0 | 3.0 | 3.8 |

### <Example 2: Test for Adding Bean Odor Mask Component to Food Using Textured Soy Protein>

In various foods containing soybean protein, whether the soybean odor was also reduced by the reagent was evaluated. In the present example, a sample for sensory evaluation was prepared according to the following procedure.

### [Nugget]

A nugget was prepared using the materials shown in Table 2. An emulsion gel cooled in a refrigerator for 2 hours was added to the rehydrated textured soy protein, followed by mixing. The mixture was immersed in a batter liquid and heated by an air fryer (manufactured by PHILIP) at 180°C for 9 minutes to obtain a nugget.

**[Table 2]**

| Table 2 Nugget material | | |
|---|---|---|
| Rehydrated textured soy protein | | 90 g |
| Emulsion gel | Soybean protein powder | 16 g |
| | Water | 66 g |
| | Vegetable oil | 8 g |
| Batter liquid | Wheat flour | 24 g |
| | Egg yolk | 1 |
| | Water | 20 ml |

### [Dumplings]

Dumplings were prepared using the materials shown in Table 3. The materials were mixed and wrapped with dumpling wrappers, followed by heating at 100°C for 2 minutes. Thereafter, 15 mL of water was added, and the mixture was steamed for 5 minutes to obtain dumplings.

**[Table 3]**

| Table 3 Dumpling materials | |
|---|---|
| Rehydrated textured soy protein | 160 g |
| Chinese cabbage | 100 g |
| Wheat flour | 5 g |

### [Hamburger Steak]

Hamburger steaks were prepared using the materials shown in Table 4. The materials were mixed, both surfaces of the mixture were baked at 100°C for 1 minute, and heated at 60°C for 4 minutes to obtain a hamburger steak.

**[Table 4]**

| Table 4 Hamburger steak materials | |
|---|---|
| Rehydrated textured soy protein | 160 g |
| Wheat flour | 15 g |

A diluent of the reagent was added such that the reagent was 0.01 ppm or 0.001 ppm per 1 g of each sample, the cooked nugget, dumpling, and hamburger steak. Sensory evaluation was performed in the same manner as in Example 1. The results are shown in Table 5.

**[Table 5]**

| Table 5 Test for addition to soybean protein food | | | | |
|---|---|---|---|---|
| Components | Final concentration | Nugget | Dumplings | Hamburger steak |
| Heptanoic acid | 0.01 ppm | 3.25 | 3.00 | 3.75 |
| | 0.001 ppm | 3.38 | 3.00 | 3.25 |
| 2,4-decadienal | 0.01 ppm | 2.88 | 3.75 | 3.00 |
| | 0.001 ppm | 2.88 | 3.00 | 3.88 |
| 3-octen-2-one | 0.01 ppm | 2.63 | 2.88 | 3.13 |
| | 0.001 ppm | 3.75 | 2.75 | 3.38 |
| Mixing of three components | 0.01 ppm | 2.00 | 2.75 | 2.75 |
| | 0.001 ppm | 3.38 | 2.75 | 3.75 |

As a result of the sensory evaluation of Example 2, when the reagents were contained at concentrations of 0.01 ppm and 0.001 ppm at which reduction in soybean odor was found in the test for adding the bean odor mask component to the textured soy protein in Example 1, the soybean odor in each food was reduced (Table 5). It was revealed from the results that the bean odor was reduced in a food containing at least one of heptanoic acid, 2,4-decadienal, and 3-octen-2-one.

It is obvious that those skilled in the art can reach modified examples or corrected examples within the scope described in the claims, and it is understood that the examples of course belong to the technical scope of the present invention. The constituent features in the embodiments may be combined freely within the scope which does not deviate from the contents of the present invention.

The present application is based on a Japanese patent application filed on November 24, 2023 (patent application No. 2023-199328), and the contents thereof are incorporated in the present application by reference.

## Claims

1. A bean odor masking agent comprising at least one of heptanoic acid, 2,4-decadienal, and 3-octen-2-one.

2. The bean odor masking agent according to claim 1, wherein the bean odor is a bean odor during chewing.

3. The bean odor masking agent according to claim 1 or 2, further comprising a flavor.

4. A method for masking a bean odor, the method comprising blending the bean odor masking agent according to claim 1 or 2 into a bean-derived food.

5. A food composition comprising the bean odor masking agent according to claim 1 or 2 and a bean-derived food.

6. A method for producing a food composition, the method comprising blending the bean odor masking agent according to claim 1 or 2 into a bean-derived food.

7. A bean-derived food-containing composition comprising at least one of heptanoic acid, 2,4-decadienal, and 3-octen-2-one.

8. The bean-derived food-containing composition according to claim 7, wherein a content of heptanoic acid is 1.0×10⁻⁷ to 5.0×10⁻⁴ parts by mass with respect to 100 parts by mass of the bean-derived food.

9. The bean-derived food-containing composition according to claim 7, wherein a content of 2,4-decadienal is 1.0×10⁻⁸ to 5.0×10⁻⁴ parts by mass with respect to 100 parts by mass of the bean-derived food.

10. The bean-derived food-containing composition according to claim 7, wherein a content of 3-octen-2-one is 1.0×10⁻⁷ to 5.0×10⁻⁴ parts by mass with respect to 100 parts by mass of the bean-derived food.
